# EUROPEAN PATENT APPLICATION

(11) **EP 2 270 711 A1**
(43) Date of publication of application: **05.01.2011**
(21) Application number: 09290512.4
(22) Date of filing: 30.06.2009
(51) Int. Cl.: G06F 21/24

(54) **Group privacy policy manager**

(71) Applicant: Alcatel Lucent, 75008 Paris (FR)
(72) Inventor: Betge Brezetz, Stéphane, 91620 Nozay (FR); Aghasaryan, Armen, 91620 Nozay (FR); Dupont, Marie-Pascale, 91620 Nozay (FR)
(74) Representative: Hedarchet, Stéphane

(57) **Abstract**

The privacy management device for managing personal data in a service delivery platform allows:
- For a group, to set a group privacy policy defining how a group data (exchanged information or membership information) may be disclosed outside (e.g. in a web site). Examples of such group privacy policy are: all users must agree, the majority of users must agree, a selected user must agree, etc.
- To check that the disclosure of each group data is performed in consistency to the previously defined policy. Note that the publication may be achieved in two ways: (i) using a dedicated web site editor that checks the policy before publication of a group data on a web site or (ii) using a web-site analyser that checks the policy once a group data is already published in a web site (via another web editor).

## Description

The present invention is related to a privacy management device for managing personal data in a service delivery platform, destined to manage the way information shared and exchanged within a group of people may be disclosed outside this group

User privacy is one of the key issues that service providers and operators have to manage regarding personal data in their service delivery platforms.

There are solutions to express user privacy requirements such as the one proposed by the W3C/P3P (Platform for Privacy Preferences). They enable web sites to express their privacy practices in a standard way. These expressions are then used by user agents to inform the users of site practices and automate decision-making on what personal data the site can access according to the user's privacy preferences. However, these privacy technologies only apply for user privacy but not group privacy.

Other solutions proposed in social networking web sites (Facebook™, Linked-in™, Viadeo™, etc.) also allows to manage user privacy (i.e., privacy of the subscriber data to the social network) but not group privacy as defined in this invention.

However, there is another dimension of privacy which will be more and more critical in the future and which could be named "group privacy". This is related to how the information shared and exchanged within a group of people can be disclosed outside of this group. This problem occurs in various domains such as private life (e.g., information related to a group of friends, relations, family) or enterprise and business domain (eg., information shared between colleagues that can be published - or not- outside of the company). The information that may be disclosed can be very diverse (document, video, pictures, mail or IM, even short note with new ideas for instance).

For the enterprise/business domain, we can mention web sites like Linked-in™ or Viadeo™ which allows to publish professional information of the subscriber (diploma, expertise, etc.) but also enterprise related information (e.g., participation in enterprise projects, retations/colleagues within these projects, ... ) that may raise strong privacy issue not for the user himself but for the group or the group entity (the enterprise in this case).

The present invention aims at solving this issue by proposing a solution ensuring that group-related data are published in accordance to a new type of privacy policy defined not for a user but for a group.

The present invention aims at solving the above-mentioned problems.

The basic idea is, according to an embodiment, to provide a device allowing, for a group, to define and automatically check the way each member can disclose -or not- data related to the information they have exchanged together or information related to their memberships themselves.

More precisely, the present invention allows:
- For the group, to set a group privacy policy defining how a group data (exchanged information or membership information) may be disclosed outside (e.g. in a web site). Examples of such group privacy policy are: all users must agree, the majority of users must agree, a selected user must agree, etc.
- To check that the disclosure of each group data is performed in consistency to the previously defined policy. Note that the publication may be achieved in two ways: (i) using a dedicated web site editor that checks the policy before publication of a group data on a web site or (ii) using a web-site analyser that checks the policy once a group data is already published in a web site (via another web editor).

The object of the present invention is a privacy management device for managing personal data in a service delivery platform, destined to manage the way information shared and exchanged within a group of people may be disclosed outside this group, said device comprising:
- A group privacy administration means for setting the group privacy policy selected by the group,
- A group privacy-based web-site editing means for checking the group privacy policy before the publication, by at least a member of the group, of a group data on a web site, or any other disclosure way,
- A group privacy-based web-site analyzing means for checking the group privacy policy once a group data is already published in a web site by a group member that has used the dedicated web editing means, said analyzing means adapted to trigger some action in case it detects some group data has been published,
- A group privacy communication means for communicating with the necessary group members either (i) to request their agreement for data publication as defined in the related group privacy policy or (ii) to alert them that a member has disclosed a data which violates the related group privacy policy,
- A group privacy evaluation means for evaluating the policy related to a group data to publish, either (i) triggering the request of agreement to the necessary group members or (ii) detecting the violation of a group privacy policy for an already published data.

According to an embodiment, the group privacy-based web-site analyzing means is adapted to automatically browse web sites over the internet, e.g. predefined websites in a database or selected with a search engine using keywords related to the group data, and to detect if some group data have been published.

According to an embodiment, the detection function performed by the group privacy-based web-site analyzing means is performed by a sub-means so-called Information εt membership mapping sub-means, such sub-means being adapted to request the group privacy communication means and evaluation means to check if a publication was authorized -or not- by the group privacy policy in case the sub-means has detected some group data published.

According to an embodiment, the group privacy communication means comprises a discloser request means adapted to request group members' agreement for data publication as defined in the related group privacy policy, and a discloser alert means adapted to alert group members that a member has disclosed a data which violates the related group privacy policy.

According to an embodiment, the group privacy evaluation means comprises an exchanged information policy checking means and Membership policy checker adapted respectively to check the policy related to exchanged information publication and membership publication.

According to an embodiment, the group privacy administration means is able to set the group privacy policy for defining the way group data such as exchanged information or membership information, may be published/unpublished externally

According to an embodiment, said group privacy policy is of the following group:
- all users must agree, possibly with the option that no response after a certain time is considered as an agreement,
- the majority of users must agree (with the same option),
- a selected user must agree (with the same option),
- one of the previous policy for publication but any user can unpublish (i.e. withdraw) the group data.

According to an embodiment, the group privacy-based web-site editing means is a plug-in of an existing web site editing means.

According to an embodiment, depending on the policy, the group privacy-based web-site editing means is adapted to request the Group privacy communication means and evaluation means to check the possibility to publish -or not- the group data.

Other objects and further features of the present invention will be apparent from the following detailed description when read in conjunction with the accompanying drawing:

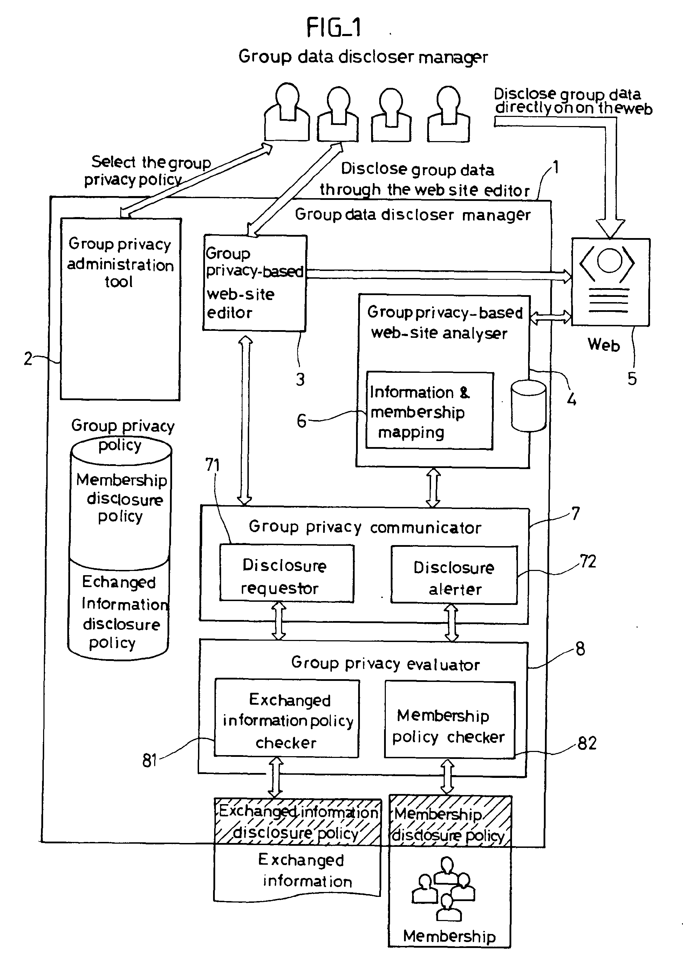

Fig. 1 schematically illustrates an embodiment of a group data discloser management device (so-called group data discloser manager for conciseness' reasons) according to the invention.

A description will hereinafter be given of embodiments of the present invention, by referring to the drawings.

Basically, the group data disclosure manager 1, as depicted in Figure 1, allows to manage the publication of data about the group (group data) in consistency with the privacy policy previously defined by this group.

A group data can be:
- *an exchanged information;* i.e. whatever information exchanged and shared within the members of the group (e.g., a technical document, meeting minutes, notes, mails, even ideas in IM etc.)
- *membership information;* i.e. the name/identity of people member of the group or other related membership information as their roles, relations, ...

The group data disclosure manager comprises the following modules:
- A Group privacy administration tool 2: this module 2 is in charge to set the group privacy policy selected by the group.

This group privacy policy defines the way group data (exchanged information or membership information) can be published/unpublished externally. Examples of such group privacy policy are:
- all users must agree (possibly with the option that no response after a certain time is considered as an agreement),
- the majority of users must agree (with the same option),
- a selected user must agree (with the same option),
- one of the previous policy for publication but any user can unpublish (i.e. withdraw) the group data.

Note that a policy can be defined for all the membership or exchanged information, but a specific policy can also be defined for a particular membership or exchange information (cf Fig. 1).

Note also that other policy may define how the agreed policy can be modified (agreement of the majority, of all members, etc.).

Once defined, the group privacy policy is stored in the database as shown in Fig. 1.
- A group privacy-based web-site editing means or editor 3: this module 2 is in charge to check the policy before the publication (by a member of the group) of a group data on a web site (or any other disclosure way). In a possible implementation, it could be a plug-in of an existing web site editor. Depending on the policy, this module will request the Group privacy communicator and evaluator modules (see below) to check the possibility to publish -or not- this group data.
- A group privacy-based web-site analyzing means or analyzer 4: this module 4 is in charge to check the policy once a group data is already published in a web site (by a group member that has used the dedicated web editor described previously). This module is automatically browsing web sites 5 over the internet (e.g., predefined in a database or selected with a search engine using keywords related to the group data) and detect if some group data have been published. This detection is based on a sub module 6 called "Information & membership mapping". If this module 6 has detected some group data published, it will request the below-described Group privacy communicator and evaluator modules to check if this was authorized -or not-by the group privacy policy.

The two previous modules ("Group privacy-based web-site editor" and "Group privacy-based web-site analyzer") rely on the following modules:
- *Group privacy communicator* 7: which allows to communicate with the necessary group members either (i) to request their agreement for data publication (as defined in the related group privacy policy) or (ii) to alert them that a member has disclosed a data which violates the related group privacy policy. The *Discloser requestor* is in charge of the first, the *Discloser alerter* of the second.
- Group privacy evaluator 8: which allows to evaluate the policy related to a group data to publish. This will either (i) trigger the request of agreement to the necessary group members or (ii) detect the violation of a group privacy policy for an already published data. This module is composed of two sub module: *Exchanged information policy checker 81* and *Membership policy* checker 82 in charge respectively to check the policy related to exchanged information publication and membership publication.

It should be noted that the privacy management device according to the invention may be partly or entirely composed of software modules.

## Claims

1. Privacy management device for managing personal data in a service delivery platform, destined to manage the way information shared and exchanged within a group of people may be disclosed outside this group, said device comprising:
- A group privacy administration means (2) for setting the group privacy policy selected by the group,
- A group privacy-based web-site editing means (3) for checking the group privacy policy before the publication, by at least a member of the group, of a group data on a web site, or any other disclosure way,
- A group privacy-based web-site analyzing means (4) for checking the group privacy policy once a group data is already published in a web site by a group member that has used the dedicated web editing means, said analyzing means adapted to trigger some action in case it detects some group data has been published,
- A group privacy communication means (7) for communicating with the necessary group members either (i) to request their agreement for data publication as defined in the related group privacy policy or (ii) to alert them that a member has disclosed a data which violates the related group privacy policy,
- A group privacy evaluation means (8) for evaluating the policy related to a group data to publish, either (i) triggering the request of agreement to the necessary group members or (ii) detecting the violation of a group privacy policy for an already published data.

2. Device according to claim 1, **characterized in that** the group privacy-based web-site analyzing means (4) is adapted to automatically browse web sites (5) over the internet, e.g. predefined websites in a database or selected with a search engine using keywords related to the group data, and to detect if some group data have been published.

3. Device according to claim 2, **characterized in that** the detection function performed by the group privacy-based web-site analyzing means is performed by a sub-means (6) so-called Information & membership mapping sub-means, such sub-means (6) being adapted to request the group privacy communication means and evaluation means to check if a publication was authorized -or not- by the group privacy policy in case the sub-means has detected some group data published.

4. Device according to any of claims 1 to 3, **characterized in that** the group privacy communication means (7) comprises a discloser request means (71) adapted to request group members' agreement for data publication as defined in the related group privacy policy, and a discloser alert means (72) adapted to alert group members that a member has disclosed a data which violates the related group privacy policy.

5. Device according to any of the previous claims, **characterized in that** the group privacy evaluation means (8) comprises an exchanged information policy checking means (81) and Membership policy checker (82) adapted respectively to check the policy related to exchanged information publication and membership publication.

6. Device according to any of the previous claims, **characterized in that** the group privacy administration means is able to set the group privacy policy for defining the way group data such as exchanged information or membership information, may be published/unpublished externally

7. Device according to any of the previous claims, **characterized in that** said group privacy policy is of the following group:
• all users must agree, possibly with the option that no response after a certain time is considered as an agreement,
• the majority of users must agree (with the same option),
• a selected user must agree (with the same option),
• one of the previous policy for publication but any user can unpublish (i.e. withdraw) the group data.

8. Device according to any of the previous claims, **characterized in that** the group privacy-based web-site editing means (3) is a plug-in of an existing web site editing means.

9. Device according to any of the previous claims, **characterized in that**, depending on the policy, the group privacy-based web-site editing means (3) is adapted to request the Group privacy communication means and evaluation means to check the possibility to publish -or not- the group data.
